# EUROPÄISCHE PATENTANMELDUNG

(11) **EP 4 586 231 A2**
(43) Veröffentlichungstag der Anmeldung: **16.07.2025**
(21) Anmeldenummer: 25173083.4
(22) Anmeldetag: 29.04.2025
(51) Int. Cl.: G09B 19/24, G09B 5/06, G06Q 10/20, F04D 19/04, F04D 27/00, G06Q 10/0631

(54) **VERFAHREN ZUM UNTERSTÜTZEN EINES BETRIEBS EINER VAKUUMKOMPONENTE SOWIE UNTERSTÜTZUNGSSYSTEM**

(71) Anmelder: Pfeiffer Vacuum Technology AG, 35614 Asslar (DE)
(72) Erfinder: Böttcher, Jochen, 35394 Gießen (DE)
(74) Vertreter: Manitz Finsterwald Patent- und Rechtsanwaltspartnerschaft mbB

(57) **Zusammenfassung**

Die Erfindung betrifft ein Verfahren zum Unterstützen eines Betriebs einer Vakuumkomponente (10) durch ein Unterstützungssystem (30), das Unterstützungssystem (30) zumindest umfassend einen Bildsensor (32), eine Auswerteeinheit (34) sowie eine Ausgabeeinheit (36). Ferner betrifft die Erfindung ein entsprechendes Unterstützungssystem (30). Darüber hinaus betrifft die Erfindung ein das Verfahren betreffendes Computerprogrammprodukt (50) und ein computerlesbares Medium (60).

## Beschreibung

Die Erfindung betrifft ein Verfahren zum Unterstützen eines Betriebs einer Vakuumkomponente durch ein Unterstützungssystem, das Unterstützungssystem zumindest umfassend einen Bildsensor, eine Auswerteeinheit sowie eine Ausgabeeinheit. Ferner betrifft die Erfindung ein entsprechendes Unterstützungssystem. Darüber hinaus betrifft die Erfindung ein das Verfahren betreffendes Computerprogrammprodukt und ein computerlesbares Medium.

Vakuumkomponenten wie beispielsweise Pumpen, Ventile, Messgeräte, aber auch zugehörige Verbindungs- und Montageelemente, werden in breiten Anwendungsfeldern eingesetzt. Für die korrekte Anwendung und Wartung sind Informationen zu den Vakuumkomponenten relevant. Zusätzlich beeinflussen zumeist jedoch auch die Einsatzbedingungen und das Zusammenspiel mit anderen Bauelementen der gesamten Anlage, in der die Vakuumkomponente eingesetzt ist, den Betrieb der Vakuumkomponente.

Insbesondere die Verbindung mit anderen Komponenten und die Umgebungsbedingungen werden häufig nur unzureichend beachtet und können bestenfalls durch geschulte Fach- bzw. erfahrene Servicetechniker bewertet werden, obwohl gerade darin Fehlerquellen oder Potential zur Optimierung der Applikation erkennbar sein können.

Ausgehend von dem voranstehend beschriebenen Herausforderungen des Stands der Technik ist es daher Aufgabe der vorliegenden Erfindung, einen sicheren und effektiven Betrieb einer Vakuumkomponente zu unterstützen. Insbesondere ist es Aufgabe der vorliegenden Erfindung, ein Verfahren, ein Unterstützungssystem, ein Computerprogrammprodukt sowie ein nicht-übertragbares computerlesbares Medium bereitzustellen, durch die ein Betrieb der Vakuumkomponente unterstützt werden können, insbesondere auch durch Anwender mit beliebigem Hintergrundwissen und ohne Schulung bezüglich der Vakuumkomponente.

Die erfindungsgemäße Aufgabe wird durch die Patentansprüche gelöst. Insbesondere wird die Aufgabe gelöst durch ein erfindungsgemäßes Verfahren gemäß Anspruch 1, durch ein erfindungsgemäßes Unterstützungssystem gemäß Anspruch 11, durch ein erfindungsgemäßes Computerprogrammprodukt gemäß Anspruch 14, sowie durch ein erfindungsgemäßes nicht-übertragbares computerlesbares Medium gemäß Anspruch 15. Weiterbildungen der Erfindung ergeben sich aus den Unteransprüchen, der Beschreibung und den Zeichnungen. Dabei gelten Merkmale und Vorteile, die mit Bezug auf das erfindungsgemäße Verfahren beschrieben sind, auch für das erfindungsgemäße Unterstützungssystem, das erfindungsgemäße Computerprogrammproduckt, das erfindungsgemäße Medium und jeweils umgekehrt, soweit technisch sinnvoll und möglich.

Gemäß einem ersten Aspekt der Erfindung wird die Aufgabe gelöst durch ein Verfahren zum Unterstützen eines Betriebs einer Vakuumkomponente durch ein Unterstützungssystem, das Unterstützungssystem zumindest umfassend einen Bildsensor, eine Auswerteeinheit sowie eine Ausgabeeinheit. Das erfindungsgemäße Verfahren weist zumindest folgende Schritte auf:
a) Aufnehmen eines Abbilds der Vakuumkomponente durch den Bildsensor,
b) Auswerten des in Schritt a) aufgenommenen Abbilds durch die Auswerteeinheit zum Erkennen der Vakuumkomponente im Abbild,
c) Bestimmen eines Bautyps der in Schritt b) erkannten Vakuumkomponente durch die Auswerteeinheit,
d) Ermitteln von den Betrieb des in Schritt c) bestimmten Bautyps der Vakuumkomponente betreffenden Informationen durch die Auswerteeinheit, und
e) Bereitstellung der in Schritt d) ermittelten Informationen durch die Ausgabeeinheit.

Durch das erfindungsgemäße Verfahren kann auch einem Benutzer ohne spezielle Vorkenntnisse über die entsprechende Vakuumkomponente Information an die Hand gegeben werden, um einen Betrieb der Vakuumpumpe unterstützen zu können. Das erfindungsgemäße Verfahren wird unter Verwendung eines Unterstützungssystems durchgeführt, bevorzugt eines erfindungsgemäßen Unterstützungssystems gemäß dem zweiten Aspekt der Erfindung.

Das zum Ausführen des erfindungsgemäßen Verfahrens verwendete Unterstützungssystem weist alle Komponenten und Bauelemente auf, die hierfür notwendig sind. Die einzelnen Komponenten des Unterstützungssystems können hierbei an einem einzigen Ort, beispielsweise sogar in einem gemeinsamen Gehäuse, angeordnet sein. Alternativ können verschiedene Komponenten des Unterstützungssystems auch räumlich voneinander getrennt positioniert sein. In seiner minimalen Grundausstattung weist das Unterstützungssystem einen Bildsensor, eine Auswerteeinheit und eine Ausgabeeinheit auf.

Der Bildsensor ist hierbei zum Aufnehmen von digitalen Abbildern ausgebildet und weist für diesen Zweck beispielsweise einen entsprechenden lichtempfindlichen Detektor wie beispielsweise einen CCD oder CMOS auf. Weiter kann der Bildsensor auch mit einer Abbildungsoptik ausgestattet sein. Mit anderen Worten, bevorzugt kann der Bildsensor im Wesentlichen wie eine digitale Kamera ausgebildet, oder auch durch eine derartige digitale Kamera gebildet sein.

Weiter können auch mehrere Bildsensoren vorhanden sein. Sämtliche Beschreibungen und Erläuterungen, die im Folgenden auf einen Bildsensor Bezug nehmen, können im Sinne der Erfindung entsprechend auf ein Unterstützungssystem mit einer Mehrzahl von Bildsensoren übertragen werden.

Die Ausgabeeinheit wiederum ist zum Ausgeben von Informationen vorgesehen. Diese Informationen sind bevorzugt visuell, so dass eine bevorzugte Variante der Ausgabeeinheit ein Bildschirm, insbesondere ein berührungsempfindlicher Bildschirm ist. Die Informationen können alternativ oder zusätzlich auch akustisch ausgeformt sein und dann über eine entsprechende Ausgabeeinheit umfassend einen Lautsprecher ausgegeben werden. Bei audio-visuellen Informationen sind dann beide Elemente als Teil der Ausgabeeinheit vorhanden, insbesondere also sowohl ein Bildschirm als auch ein Lautsprecher. Seltener aber dennoch möglich kann die Ausgabeeinheit auch als ein Drucker, 3D-Drucker oder ähnliches ausgebildet sein oder diesen umfassen, wodurch eine Ausgabe der Information in ausgedruckter und/oder haptischer Form ermöglicht werden kann.

Eine Ausgabeeinheit gemäß der vorliegenden Erfindung kann auch eine Schnittstelle für eine datenkommunizierende Verbindung aufweisen, insbesondere um eine der vorgenannten Ausgabevarianten, also visuell, akustisch, audio-visuell, gedruckt und/oder haptisch, durch ein externes Gerät zu ermöglichen. Auch eine datenkommunizierende Verbindung mit der Vakuumkomponente für ein Übermitteln von Daten, insbesondere vom Unterstützungssystem an die Vakuumkomponente, ist denkbar. Eine derartige Schnittstelle kann in der Ausgabeeinheit bevorzugt zusätzlich zu anderen, ihrerseits für ein Bereitstellen der in Schritt d) ermittelten Information ausgebildeten, Elementen vorgesehen sein.

Die Auswerteeinheit ist sowohl mit dem Bildsensor als auch mit der Ausgabeeinheit datenkommunizierend verbunden. Sie weist zumindest einen Prozessor auf, der zum Empfangen und Auswerten von Daten, insbesondere des Bildsensors, ausgebildet ist. Basierend auf den empfangenen Daten beziehungsweise deren Auswertung kann der Prozessor dann eine entsprechende Information auswählen, und durch Ansteuern der Ausgabeeinheit dem Benutzer bereitstellen.

Im Folgenden wird ein grundlegender Ablauf der einzelnen Schritte des erfindungsgemäßen Verfahrens beschrieben.

In einem ersten Schritt a) wird durch den Bildsensor ein Abbild der Vakuumkomponente aufgenommen. Mit anderen Worten, nach Ausführung des Schritts a) ist im Unterstützungssystem ein Abbild mit einer digitalen Aufnahme der Vakuumkomponente bereitgestellt.

Das Abbild kann zumindest ein Standbild umfassen. Die Auswerteeinheit steuert insbesondere den Bildsensor an, der dann ein Abbild aufnimmt, wobei die Vakuumkomponente in diesem Abbild enthalten ist. Hierfür kann beispielsweise auch ein Ausrichten des Bildsensors derart, dass die Vakuumkomponente im Abbild enthalten ist, bevorzugt vollständig enthalten ist, erfolgen, wobei das Ausrichten automatisch durch ein entsprechendes Ansteuern von dann vorhandenen Stellmotoren, oder alternativ oder zusätzlich durch den Benutzer selbst erfolgen kann. Auch ein Aufstellen und eine entsprechende Ausrichtung des Bildsensors im Vorfeld, beispielsweise bei einer Erstmontage der Vakuumkomponente, ist denkbar. Dem Schritt a) kann ein Empfangen einer entsprechenden Anforderung nach Information durch einen Benutzer vorausgehen.

Im folgenden Schritt b) des erfindungsgemäßen Verfahrens wird das in Schritt a) aufgenommene Abbild an die Auswerteeinheit weitergegeben und dann durch diese ausgewertet. Ziel der Auswertung ist hierbei, im Abbild die entsprechend abgebildete Vakuumkomponente zu erkennen. Dieses Auswerten kann auf verschiedene Weise erfolgen, beispielsweise durch einen Vergleich mit Beispielbildern aus einer Datenbank, einer Anwendung von Algorithmen zum Erkennen von Konturen und/oder Gegenständen in Bildern, oder auch durch künstliche Intelligenz. Auch eine Kombination mehrerer verschiedener Verfahren ist denkbar. Vakuumkomponenten, die in Schritt b) erkannt werden, können beispielsweise Pumpen, Ventile, Messgeräte und/oder dafür notwendige Verbindungs- und Montageelemente sein. Zusammenfassend ist nach Abschluss des Schritts b) eine Information dahingehend verfügbar, dass in dem in Schritt a) aufgenommenen Abbild eine Vakuumkomponente vorhanden ist.

Diese Information wird im nächsten Schritt c) des erfindungsgemäßen Verfahrens noch weiter spezifiziert, indem durch die Auswerteeinheit ein Bautyp der in Schritt b) erkannten Vakuumkomponente bestimmt wird. Auch für diesen Schritt können wieder verschiedene Verfahren eingesetzt werden, beispielsweise erneut ein Vergleich mit Beispielbildern, eine Anwendung von Algorithmen zum Erkennen von Konturen und/oder Gegenständen, oder auch künstliche Intelligenz. Dadurch, dass die Vakuumkomponente in Schritt b) bereits erkannt worden ist, muss jedoch beim Bestimmen des Bautyps nicht mehr das gesamte Abbild analysiert werden, sondern nur derjenige Teil des Abbilds, der auch tatsächlich die Vakuumkomponente zeigt. Dadurch kann das Bestimmen schneller durchgeführt werden.

Als Bautyp im Sinne der Erfindung wird hierbei zum einen die tatsächliche Ausgestaltung der Vakuumkomponente bestimmt, also ob es sich beispielsweise um eine Pumpe, ein Ventil oder ein Messgerät handelt. Darüber hinaus wird zum anderen auch bestimmt, welche tatsächliche Ausfertigung der entsprechenden Vakuumkomponente vorhanden ist. Bei einer Pumpe als erkannte Vakuumkomponente wird also als Bautyp bestimmt, dass es sich, als nicht einschränkendes Beispiel, um eine Turbomolekularvakuumpumpe handelt, und darüber hinaus auch um welche Bauart- und -reihe es sich bei dieser Turbopumpe handelt. Mit anderen Worten, nach Ausführung des Schritts c) ist die vorhandene Vakuumkomponente bevorzugt eindeutig identifiziert.

Die voranstehend aufgeführten Schritte b) und c) können nacheinander durchgeführt werden. Alternativ ist auch eine zumindest im Wesentlichen gleichzeitig Ausführung der Schritte b) und c) denkbar, wobei dann das Erkennen der Vakuumkomponente im Abbild derart detailliert ausgeführt wird, dass hierbei auch parallel der entsprechende Bautyp der Vakuumkomponente bestimmt wird.

Weiter kann es vorkommen, dass das Erkennen der Vakuumkomponente in Schritt b) und/oder das Bestimmen des Bautyps in Schritt c) zu keinem eindeutigen Ergebnis führt. In diesem Fall kann vorgesehen sein, dass die Auswerteeinheit eine Wiederholung der bisherigen Schritte auslöst, insbesondere des Aufnehmens des Abbilds in Schritt a). Bevorzugt kann hierbei weiter vorgesehen sein, dass das erneute Aufnehmen des Abbilds unter einem anderen Blickwinkel erfolgt, um die in den Schritten b) und c) vorgenommene Identifizierung der vorhandenen Vakuumkomponente basierend auf einer unterschiedlichen Grundlage durchführen zu können. Dies kann beispielsweise durch ein erneutes Ansteuern des Bildsensors durch die Auswerteeinheit erfolgen. Alternativ oder zusätzlich kann die Auswerteeinheit auch über die Ausgabeeinheit eine Aufforderung an den Benutzer des Unterstützungssystems aussenden, so dass dieser die Wiederholung des Aufnehmens des Abbilds durchführt oder zumindest unterstützt, beispielsweise durch eine Anpassung einer Ausrichtung des Bildsensors. Ferner kann die erneute Durchführung der Schritte b) und c) dadurch auf eine breitere Datenbasis gestützt werden, dass zusätzlich auch das im ersten Durchgang aufgenommene Abbild herangezogen wird.

Insgesamt steht nach erfolgreichem Abschluss des Schritts c) eine Information dahingehend zur Verfügung, welche Vakuumkomponente welchen Bautyps vorliegt.

Dies ermöglicht es für die Auswerteeinheit, im folgenden Schritt d) Informationen zu ermitteln, die den Betrieb des entsprechenden Bautyps einer Vakuumkomponente betreffen. Derartige Informationen können beispielsweise statische Informationen wie zum Beispiel Datenblätter, Betriebsanleitungen oder mögliches Zubehör für den erkannten Bautyp sein. Weiter können auch Handlungsempfehlungen, wie beispielsweise Wartungsempfehlungen, Empfehlungen beziehungsweise Vorgaben für einstellbare beziehungsweise einzustellende Betriebsparameter der Vakuumkomponente oder Hinweise auf weitere hilfreiche Produkte oder Verbrauchsmaterialien, als den Betrieb der spezifisch bestimmten Vakuumkomponente betreffende dynamische Informationen ermittelt werden.

Auch eine Bewertung der Vakuumkomponente, beispielsweise in Bezug auf eine korrekte Montage und/oder einen sicheren, bestimmungsgemäßen und insbesondere optimalen Betrieb, kann im Schritt d) bei der Ermittlung der Information vorgenommen werden, wobei ein Ergebnis dieser Bewertung, eventuell auch inklusive der in der Bewertung mit einbezogenen Bewertungskriterien, als ermittelte Information bereitgestellt werden kann. Basierend auf der Bewertung können alternativ oder zusätzlich auch Hinweise und/oder Anleitungen als Information ermittelt werden, die beispielsweise Warnhinweise bei erkannten Fehlerquellen und/oder Vorschläge für eine Optimierung von Betriebsparametern umfassen. Das Ermitteln der Informationen kann beispielsweise durch eine Datenbankabfrage erfolgen, in der für den entsprechenden Bautyp einer Vakuumkomponente die passenden Informationen hinterlegt sind.

Abschließend werden im letzten Schritt e) des erfindungsgemäßen Verfahrens diese in Schritt d) ermittelten Informationen durch die Ausgabeeinheit bereitgestellt. Je nach Ausgestaltung der Ausgabeeinheit kann dies visuell, audio-visuell, rein akustisch und/oder in physischer beziehungsweise haptischer Form erfolgen. Dadurch können insbesondere auch Anwendern mit beliebigem Hintergrundwissen und insbesondere ohne Schulung bezüglich des vorliegenden Bautyps einer Vakuumkomponente für einen Betrieb der Vakuumkomponente hilfreiche oder sogar notwendige Informationen bereitgestellt werden. Auch ein Bereitstellen der Information über eine datenkommunizierende Verbindung ist grundsätzlich denkbar.

Eine Unterstützung des Betriebs der entsprechenden Vakuumkomponente kann dadurch erreicht oder zumindest ermöglicht werden.

Ferner kann bei dem erfindungsgemäßen Verfahren vorgesehen sein, dass in Schritt a) das Abbild der Vakuumkomponente als ein Standbild und/oder als mehrere Standbilder aus verschiedenen Perspektiven und/oder als ein Video der Vakuumkomponente aufgenommen wird. Bereits ein einziges Standbild kann genug Details der Vakuumkomponente enthalten, die das Erkennen der Vakuumkomponente in Schritt b) und das Bestimmen des Bautyps in Schritt c) ermöglichen. Ein einzelnes Standbild weist hierbei insbesondere den Vorteil auf, dass es im Vergleich zu mehreren Standbildern oder sogar zu einem Video nur eine geringe Datenmenge darstellt. Dies ist insbesondere dann von Vorteil, wenn die Auswerteeinheit und der Bildsensor physisch an verschiedenen Orten angeordnet sind und die entsprechenden Daten, insbesondere drahtlos, übertragen werden müssen. Andererseits stellen mehrere Standbilder aus verschiedenen Perspektiven und damit insbesondere von verschiedenen Seiten, und insbesondere ein Video, in dem bevorzugt die Vakuumkomponente ebenfalls in mehreren Perspektiven gezeigt ist, eine im Vergleich zu einem einzigen Standbild deutlich erweiterte Datengrundlage dar, um im Abbild die Vakuumkomponente zu erkennen und deren Bautyp zu bestimmen. Somit kann bei dem erfindungsgemäßen Verfahren eine den äußeren Gegebenheiten entsprechend gewählte Variante des Abbilds und damit die jeweils passendste Variante eingesetzt werden.

Weiter kann das erfindungsgemäße Verfahren dadurch gekennzeichnet sein, dass das Abbild in Schritt b) zum Erkennen der Vakuumkomponente und/oder in Schritt c) zum Bestimmen des Bautyps der Vakuumkomponente durch die Auswerteeinheit bezüglich eines Identifizierungskennzeichens ausgewertet wird, wobei als Identifizierungskennzeichen bevorzugt wenigstens eines der folgenden Merkmale verwendet wird:
- Typenschild,
- Beschriftung,
- QR-Code,
- Umriss,
- dreidimensionale Form,
- Vorhandensein und/oder Anordnung von Subkomponenten der Vakuumkomponente,
- Vorhandensein und/oder Anordnung von weiteren, mit der Vakuumkomponente verbundenen Elementen.

Diese Liste ist nicht abgeschlossen, es können auch weitere geeignete Merkmale als Identifizierungskennzeichen herangezogen werden.

Typenschilder und/oder Beschriftungen sind besonders einfache und dabei dennoch zumeist eindeutige Merkmale, die insbesondere eine Bestimmung des Bautyps erleichtern. Ein QR-Code, der auf oder zumindest in der Nähe der Vakuumkomponente angeordnet und im Abbild erkennbar ist, kann beispielsweise ebenfalls Informationen enthalten, die eine Identifizierung des Bautyps der Vakuumkomponente ermöglichen oder zumindest deutlich erleichtern.

Eine dreidimensionale Form der Vakuumkomponente, deren zweidimensionale Projektion senkrecht zu einer Blickrichtung des Bildsensors den Umriss der abgebildeten Vakuumkomponente darstellt, kann beispielsweise einen Verlauf von Kanten, Vorsprüngen und/oder Einbuchtungen im äußeren Erscheinungsbild der Vakuumkomponente umfassen. Bereits das Erkennen der Vakuumkomponente an sich, aber auch das Bestimmen des Bautyps kann durch diese Merkmale erfolgen.

Weiter können sich insbesondere verschiedene Bautypen einer Vakuumkomponente dahingehend unterscheiden, dass unterschiedliche Subkomponenten der Vakuumkomponente vorhanden sind beziehungsweise fehlen, und/oder wie diese Subkomponenten an einer Basisstruktur der Vakuumkomponente angeordnet sind. Derartige Subkomponenten können beispielsweise integrierte Anzeigen oder Eingabefelder sein, aber auch Kühleinheiten, Lüfter, Gasanschlüsse oder ähnliches. Eine Auswertung des Abbild hinsichtlich derartiger Subkomponenten kann somit ermöglichen, Bautypen von ansonsten sehr ähnlichen Vakuumkomponenten zu unterscheiden.

Ähnliches gilt für weitere, mit der Vakuumkomponente verbundene Elemente. Diese sind, im Gegensatz zu Subkomponenten, keine Bauteile der Vakuumkomponente, können aber dennoch für einzelne Bautypen von Vakuumkomponenten spezifisch sein. Hierzu zählen beispielsweise externe Steuergeräte oder Energieversorgungen, die mit der Vakuumkomponente verbunden sind und insbesondere Rückschlüsse auf den inneren Aufbau der Vakuumkomponente, und damit den entsprechenden Bautyp, ermöglichen.

Zusammenfassend kann durch eine Auswertung des Abbilds bezüglich eines Identifizierungskennzeichens eine Erkennung der Vakuumkomponente und insbesondere eine Bestimmung des Bautyps verbessert werden.

Weiter kann das erfindungsgemäße Verfahren auch dahingehend ausgebildet sein, dass in Schritt a) zusätzlich eine Umgebung der Vakuumkomponente im Abbild aufgenommen wird, wobei, insbesondere in Schritt b) und/oder Schritt c), die in Schritt a) aufgenommene Umgebung analysiert wird, und wobei in Schritt d) die Informationen zusätzlich basierend auf Ergebnissen der durchgeführten Analyse der Umgebung ermittelt werden, wobei bevorzugt die in Schritt a) aufgenommene Umgebung nach zumindest einem der folgenden Kriterien analysiert wird:
- Aufstellort,
- Verschmutzungsgrad der Umgebung,
- Aufbauorientierung,
- Befestigung der Vakuumkomponente,
- Abstände der Vakuumkomponente zu Gegenständen in der Umgebung,
- Subkomponenten der Vakuumkomponente und deren Eigenschaften,
- mit der Vakuumkomponente verbundene weitere Elemente und deren Eigenschaften, insbesondere Energieversorgung und/oder Gaszuführung und/oder Gasableitung.

Diese Liste ist nicht abgeschlossen, es können auch weitere geeignete Kriterien für eine Analyse der Umgebung herangezogen werden.

Eine Umgebung im Sinne der Erfindung ist insbesondere alles, was im in Schritt a) aufgenommenen Abbild enthalten ist, aber nicht die eigentliche Vakuumkomponente darstellt. Eine Aufnahme einer gewissen Umgebung ist zumeist unvermeidbar, sobald die Vakuumkomponente das Abbild nicht vollständig ausfüllt. Eine Aufnahme einer zusätzlichen Umgebung wie vorab beschrieben stellt jedoch eine tatsächlich beabsichtigte Erweiterung des Blickfelds des Bildsensors dar, um im Schritt a) des erfindungsgemäßen Verfahrens eben nicht nur die Vakuumkomponente aufzunehmen, sondern auch eine Umgebung, in der die Vakuumkomponente aufgestellt ist.

Eine Analyse dieser zusätzlich aufgenommenen Umgebung kann insbesondere Rückschlüsse dahingehend zulassen, für welchen Zweck die Vakuumkomponente während ihres Betriebs eingesetzt werden soll. Dies kann bei der Ermittlung der den Betrieb betreffenden Information berücksichtigt werden, um eine noch besser an den Betrieb der Vakuumkomponente angepasste Information zu ermitteln. Insbesondere kann dadurch berücksichtigt werden, dass sich ein Betrieb oder zumindest die anzuzeigende Information für zwei Vakuumkomponenten desselben Bautyps trotzdem unterscheiden kann, wenn diese in unterschiedlichen Umgebungen aufgestellt sind.

So kann beispielsweise eine Analyse bezüglich des Aufstellorts ergeben, ob die Vakuumkomponente zum Beispiel im Außenbereich aufgestellt ist, sich dort ungeschützt unter freiem Himmel oder durch eine Dachkonstruktion zumindest gegen Regen abgeschirmt befindet, oder ganz im Inneren eines Gebäudes betrieben wird. Gleichzeitig oder zusätzlich kann durch eine Analyse des aufgenommenen Abbilds ein Verschmutzungsgrad der Umgebung ermittelt werden. All diese Merkmale stellen Rahmenbedingungen für einen Betrieb der Vakuumkomponente dar, die beispielsweise durch eine Angabe von an diese Rahmenbedingungen angepassten Wartungsintervallen in den ermittelten Informationen berücksichtigt werden können.

Die Auswertung des Aufstellorts kann alternativ oder zusätzlich auch dahingehend erfolgen, ob in der Umgebung der Vakuumkomponente weitere Anlagen und/oder Gebäudeinstallationen wie Heizungen, Türen oder ein Aufzug, vorhanden sind. Basierend auf den erkannten Objekten kann dann insbesondere eine mögliche Wechselwirkung beziehungsweise gegenseitige Beeinflussung der Vakuumkomponente und der erkannten Objekte, zum Beispiel ein Wärmeeintrag und/oder eine Schwingungsübertragung, erkannt werden. Die Wechselwirkung kann hierbei in einer oder in beiden Richtungen auftreten, von der Vakuumkomponente in die Umgebung und/oder aber auch umgekehrt. Das entsprechende Ergebnis der Analyse kann dann wiederum in Schritt d) bei der Ermittlung der den Betrieb der Vakuumkomponente betreffenden Information berücksichtigt werden, in den oben genannten Beispielen etwa durch einen Hinweis auf einen erhöhten Kühlbedarf der Vakuumkomponente bei einem Aufstellort nahe einer Heizung, oder bei einer eventuell erforderlichen zusätzlichen Schwingungsdämpfung der Vakuumkomponente, um eine in der Umgebung der Vakuumkomponente aufgestellte empfindliche Waage vor Störungen durch Schwingungsübertragung während des Betriebs der Vakuumpumpe zu schützen.

Auch können die ermittelten Informationen bei Erkennen einer hohen Verschmutzung der Vakuumkomponente einen Hinweis auf eine Verkürzung von Wartungsintervallen oder eine Empfehlung von für eine derartige Umgebung besonders Geeignete Betriebsmittel umfassen. Weiter sind auch eine Aufforderung und/oder eine Anleitung zur Reinigung der Vakuumkomponente beziehungsweise eine Empfehlung für geeignete Reinigungsmittel möglich, die zum Beispiel bei einem erkannten Einsatz der Vakuumkomponente in einem Reinraum nicht erforderlich sind.

Ein erkannter und ausgewerteter Verschmutzungsgrad kann alternativ oder zusätzlich auch ein Erkennen eines Austritts von Flüssigkeiten, insbesondere Kühl-oder Betriebsmitteln, aus der Vakuumkomponente ermöglichen, wie es insbesondere bei einer Fehlfunktion der Vakuumkomponente auftreten kann. Die in Schritt d) ermittelten Informationen können dann zumindest einen Hinweis auf diese Fehlfunktion und/oder damit verbundene mögliche Gefahren für die Vakuumkomponente selbst, einen Benutzer und/oder die Umwelt enthalten. Bevorzugt können hierbei insbesondere auch Anleitungen zur Behebung der Fehlfunktion als Information ermittelt werden.

Weitere Merkmale der Umgebung, die bei der Analyse als Kriterien verwendet werden können, sind beispielsweise eine Aufbauorientierung oder auch eine Befestigung der Vakuumkomponente an ihrem Aufbauort. Einige Bautypen von Vakuumkomponenten sollten beispielsweise nur senkrecht montiert werden und/oder benötigen eine sichere Befestigung, zum Beispiel durch eine ausreichende Zahl von Schrauben. Ferner sind oftmals auch Abstände, insbesondere Mindestabstände, zu Gegenständen in der Umgebung der Vakuumkomponente zu beachten, beispielsweise um eine ausreichende Luftzirkulation beziehungsweise einen ausreichenden Luftstrom um die Vakuumkomponente für deren Kühlung zu gewährleisten. Bei der Analyse der Umgebung können diese beziehungsweise entsprechende Vorgaben für den in Schritt c) bestimmten Bautyp der erkannten Vakuumkomponente überprüft werden, und basierend auf dem Ergebnis dieser Analyse kann dann in den in Schritt d) ermittelten Informationen beispielsweise auf eine ungünstige Orientierung der Vakuumkomponente oder eine fehlerhafte Befestigung hingewiesen werden.

Auch kann das Abbild nach Subkomponenten der Vakuumkomponente durchsucht werden. Hier kann für die Ermittlung der Information beispielsweise von Interesse sein, ob Subkomponenten, die bei der erkannten Vakuumkomponente beziehungsweise dem bestimmten Bautyp vorhanden sein sollten, im aufgenommenen Abbild erkennbar sind, oder auch ob diese erkennbar fehlen. Bei erkannten Subkomponenten kann ferner ein korrekter Einbau überprüft werden.

Darüber hinaus können auch mit der Vakuumkomponente verbundene weitere Elemente bei der Analyse der im Abbild aufgenommenen Umgebung erkannt werden. Derartige weitere Komponenten können zum Beispiel Elemente einer Energieversorgung wie insbesondere Netzteile, oder eine Gaszuführung beziehungsweise eine Gasableitung sein. Die Eigenschaften dieser erkannten weiteren Komponenten sollten idealerweise auf den vorhandenen Bautyp der Vakuumkomponente abgestimmt sein. In den voranstehenden Beispielen sollte beispielsweise ein erkanntes Netzteil bezüglich seiner elektrischen Eigenschaften wie Spannung, Strom, und/oder Leistung den Anforderungen der Vakuumkomponenten entsprechen, und auch entsprechende elektrische Leitungen ausreichend dimensioniert sein. Gaszuführungen beziehungsweise -ableitungen sollten ebenfalls mit einem entsprechend der Vakuumkomponente passend gewählten Durchmesser ausgestattet sein, wobei für manche Vakuumkomponenten auch eine Länge der Gaszuführungen beziehungsweise -ableitungen beachtet werden müssen. All diese Merkmale können bei der Analyse der Umgebung bestimmt und anschließend in Schritt d) bei der Ermittlung der Informationen berücksichtigt werden.

Das voranstehend angeführte Erkennen eines Aufstellorts der Vakuumkomponente in ihrer Umgebung beziehungsweise der Eigenschaften der Umgebung selbst, alternativ oder zusätzlich auch die Identifikation von Subkomponenten und/oder mit der Vakuumkomponente verbundenen weiteren Elementen kann insbesondere auch ermöglichen, dass Rückschlüsse auf den Einsatzzweck der Vakuumkomponente gezogen werden können. Je nach Einsatzzweck können verschiedene Anforderungen an die Vakuumkomponente gestellt sein beziehungsweise unterschiedliche Belastungen der Vakuumkomponente auftreten. Auch dies kann in den in Schritt d) ermittelten Informationen berücksichtigt werden. So können beispielsweise auf den jeweiligen Einsatzzweck abgestimmte Zusatzinformationen und/oder optimierte Anwendungsempfehlungen, zum Beispiel hinsichtlich besonders geeigneter spezieller Betriebsmittel für die Vakuumkomponente oder angepasste Wartungsempfehlungen, als den Betrieb der Vakuumkomponente betreffende Informationen ermittelt werden.

Gemäß einer weiteren Ausgestaltung des erfindungsgemäßen Verfahrens kann ferner vorgesehen sein, dass in Schritt a) weitere Sensoren und/oder Datenquellen zum Bereitstellen von Daten angesteuert und deren Daten ausgelesen werden, und wobei in Schritt d) die Informationen zusätzlich basierend auf den in Schritt a) ausgelesenen Daten der weiteren Sensoren und/oder Datenquellen ermittelt werden, wobei bevorzugt zumindest einer der weitere Sensoren und/oder Datenquellen eingesetzt wird:
- Schallsensor,
- Wärmesensor, insbesondere Wärmebildkamera,
- Feuchtigkeitssensor,
- Temperatursensor,
- Höhenmessung,
- Datum,
- Uhrzeit,
- Wetterdaten,
- Ortungsdienste,
- Erdbebenwarnung,
- Sonnenaktivität.

Diese Liste ist nicht abgeschlossen, es können auch weitere geeignete weitere Sensoren und/oder Datenquellen herangezogen werden, um die Ermittlung der den Betrieb der Vakuumkomponente betreffenden Informationen noch weiter zu verbessern.

Weitere Sensoren im Sinne der Erfindung sind insbesondere Sensoren, deren Messdaten über ein einfaches Abbild der Vakuumkammer und gegebenenfalls ihrer Umgebung hinausgehen. Die Messdaten dieser weiteren Sensoren können daher verwendet werden, um insbesondere noch nicht berücksichtigte Parameter und/oder Rahmenbedingungen, die einen Einfluss auf den Betrieb der Vakuumkomponente haben können, zu ermitteln. Gleiches gilt für Datenquellen, durch die Daten bereitgestellt werden können. Im Unterschied zu Sensoren, die insbesondere zumeist direkt von der Auswerteeinheit zum Auslesen ihrer Daten angesteuert werden, werden unter Datenquellen im Sinne der Erfindung insbesondere beispielsweise Nachschlageseiten im Internet verwendet.

Zusammenfassend können somit durch eine Einbeziehung von Daten weiterer Sensoren und/oder Datenquellen bei der Ermittlung der den Betrieb der Vakuumkomponente betreffenden Informationen Einflüsse, Parameter und/oder Rahmenbedingungen berücksichtigt werden, die durch das Abbild der entsprechenden Vakuumkomponente und deren Umgebung nicht zur Verfügung stehen würden. Die entsprechenden Informationen können somit noch spezifischer und bedarfsgerechter ermittelt werden.

So können beispielsweise Schallsensoren und/oder Wärmesensoren direkte Informationen über einen aktuellen Status des Betriebs der Vakuumkomponente liefern.

Als Schallsensoren können hierbei einfache Mikrophone, wie sie beispielsweise in einer Kamera oder einem Smartphone verbaut sind, verwendet werden, beispielsweise indem eine Tonspur eines aufgenommenen Videos der Vakuumkomponente ausgewertet wird. Alternativ oder zusätzlich können auch ein dediziert aufgestelltes Mikrophon oder sogar mehrere Mikrophone verwendet werden, wobei letztere insbesondere nicht nur eine Aufnahme von Geräuschen, sondern sogar eine dreidimensionale Ortung von Geräuschquellen erlauben können. Dies kann beispielsweise ermöglichen, Betriebsgeräusche der Vakuumkomponente aufzunehmen, und in einer entsprechenden Analyse dann zum Beispiel einen Zustand von Kugel- oder Wälzlagern, Schwingungseintrag aus der beziehungsweise in die Umgebung, Schaltvorgänge, Zustand von Ventilen und ähnliches zu ermitteln.

Wärmesensoren wiederum ermöglichen eine Bestimmung einer Temperatur der Vakuumkomponente, eventuell auch der Umgebung um die Vakuumkomponente. Durch einen Einsatz von Wärmebildkameras kann diese Temperaturmessung weiter ortsaufgelöst erfolgen. Bereits ein einfacher Wärmesensor, insbesondere aber eine Wärmebildkamera, ermöglicht somit eine Darstellung einer Wärmeverteilung in der Vakuumkomponente und/oder deren Umgebung, wodurch in einer Analyse, beispielsweise durch einen Vergleich mit hinterlegten Idealwerten, problematische bzw. optimale Temperaturverteilungen erkannt werden können. Bei der Ermittlung der Information in Schritt d) kann dies beispielsweise zu Hinweisen auf eine Übertemperatur an Teilen der Vakuumkomponente oder auf eine nicht ausreichende Temperatur zur Verhinderung von Kondensation in der Vakuumkomponente oder mit ihr verbundenen weiteren Elementen wie Zuleitungen oder Ableitungen führen.

Feuchtigkeitssensoren, Temperatursensoren und/oder Sensoren zur Höhenmessung können verwendet werden, um Parameter der Umgebung der Vakuumkomponente als zusätzliche Basis für die Ermittlung der Informationen in Schritt d) bereitzustellen. Vakuumkomponenten weisen oftmals Anforderungen an derartige Umgebungsparameter auf, beispielsweise kann ein Betreiben einer Vakuumpumpe in einer Umgebung mit hohen Temperaturen und/oder hoher Luftfeuchtigkeit zu einer erhöhten Belastung der Vakuumpumpe führen. Auch bei einer Aufstellung einer Vakuumpumpe in großer Höhe können sich die Betriebsparameter der Vakuumpumpe ändern, insbesondere wenn diese zum Pumpen gegen Umgebungsdruck vorgesehen ist. Insgesamt können diese durch die zusätzlichen Sensoren ermittelten Parameter bei der Ermittlung der Information in Schritt d) durch einen entsprechenden Hinweis zumindest erwähnt werden. Zusätzlich kann diesen Parametern durch angepasste Betriebsparameter wie beispielsweise eine Reduktion einer maximal zulässigen Pumpleistung, durch eine Anpassung einer Kühlleistung und/oder durch verkürzte Wartungsintervalle auch aktiv begegnet werden.

Alternativ oder zusätzlich können auch externe Datenquellen, insbesondere Internetquellen, wie beispielsweise Datenquellen für Datum, Uhrzeit, Wetterdaten, Ortungsdienste, Erdbebenwarnung, und/oder Sonnenaktivität verwendet werden, um weitere Daten für eine Grundlage der Ermittlung der Information in Schritt d) zu erhalten.

Durch Einbeziehung eines Datums können beispielsweise Jahreszeiten und damit einhergehende saisonale Unterschiede bezüglich eines zu erwartenden Wetters in der Umgebung in die Ermittlung der Information in Schritt d) einfließen. Analog kann auch aus einer Uhrzeit zum Beispiel darauf geschlossen werden, ob gerade Tag oder Nacht ist, woraus sich ebenfalls Unterschiede in den ermittelten Informationen ergeben können.

So können beispielsweise Wetterdaten wie Temperatur, Luftdruck und/oder Feuchtigkeit, wie bereits oben mit Bezug auf den Temperatursensor beziehungsweise Feuchtigkeitssensor erwähnt, verwendet werden, um Parameter der direkten Umgebung zu bestimmen. Zusätzlich können diese Wetterdaten jedoch auch Prognosen für diese Parameter enthalten, die wiederum auch die Ermittlung der Information in Schritt d) beeinflussen können.

Ortungsdienste, beispielsweise GPS oder ähnliches, können eine weltweite Lokalisierung der Vakuumkomponente ermöglichen, wobei dann wiederum über entsprechend verknüpfte Datenquellen Umweltparameter für den entsprechenden Standort der Vakuumkomponente ermittelt werden können.

Weiter können aber auch Datenquellen wie beispielsweise Erdbebenwarnungen oder Vorhersagen für Sonnenaktivitäten eingesetzt werden. Beispielsweise können die in Schritt d) ermittelten Informationen dann Anweisungen enthalten, um die Vakuumkomponenten in einen sicheren Zustand zu versetzen, wenn erkannt wurde, dass die entsprechende Vakuumkomponente sensibel auf solche Ereignisse reagieren kann. Zum Beispiel können Konfigurationen von Magnetlagern entsprechend konfiguriert werden, um bei Auftreten eines Erdbebens im Erschütterungsfall vorübergehend die Systemstabilität zu erhöhen. Eine erhöhte Sonnenaktivität kann wiederum beispielsweise zu Störungen im elektrischen Versorgungsnetz führen. Dies kann bei der Ermittlung der Information in Schritt d) durch einen Hinweis auf mögliche Hilfskomponenten wie Energiespeicher (z.B. Batteriesysteme, Schwungradspeicher) oder eine Anweisung, diese vorsorglich in einen Zustand erhöhter Leistungsfähigkeit zu versetzen, berücksichtigt werden.

Auch kann das erfindungsgemäße Verfahren dadurch gekennzeichnet sein, dass vor Schritt d) durch die Auswerteeinheit eine Benutzeridentifikation durchgeführt wird, und wobei in Schritt d) bei der Ermittlung der Informationen ein Ergebnis der Benutzeridentifikation berücksichtigt wird. Die Benutzeridentifikation kann durch entsprechende Sensoren und/oder Verfahren, beispielsweise Gesichtserkennung oder ähnliches, durch das Unterstützungssystem selbst durchgeführt werden. Alternativ oder zusätzlich ist auch eine entsprechende Eingabe des Benutzers, insbesondere nach einer entsprechenden Aufforderung durch das Unterstützungssystem, denkbar. Die Benutzeridentifikation kann bevorzugt Daten über den jeweiligen Benutzer bereitstellen, beispielsweise seine Position und/oder seinen Wissenstand. Durch eine Benutzeridentifikation kann somit im Unterstützungssystem, insbesondere in der Auswerteeinheit, eine Information dahingehend hinterlegt werden, für wen die in Schritt d) ermittelte Information bestimmt ist. Dies ermöglicht, durch eine Berücksichtigung dieser Benutzeridentifikation in Schritt d) die Information benutzerspezifisch zu ermittelten. Bevorzugt kann beispielsweise ein Wissenstand des entsprechend identifizierten Benutzers beim Ermitteln der Information berücksichtigt werden, so dass in Schritt e) keine für den Benutzer redundante Information ausgegeben wird.

Gemäß einer weiteren Ausgestaltung kann bei dem erfindungsgemäßen Verfahren ferner vorgesehen sein, dass die Benutzeridentifikation eine Authentifizierung des Benutzers umfasst. Eine derartige Authentifizierung kann zum Beispiel auf einer Passworteingabe, auf einem physikalischen und/oder digitalen Schlüssel, und/oder auf biometrischen Merkmalen des Benutzers wie beispielsweise ein Fingerabdruck oder eine Gesichtserkennung, beruhen. Durch eine derartige Authentifizierung und insbesondere deren Berücksichtigung bei der Ermittlung der Information in Schritt d) kann sichergestellt werden, dass in Schritt e) sicherheitsrelevante Informationen nur einem dafür vorgesehenen Personenkreis ausgegeben werden.

Auch kann das erfindungsgemäße Verfahren dahingehend ausgebildet sein, dass ein digitales Modell der Vakuumkomponente für eine Bestimmung eines erwarteten Verlaufs des Betriebs der Vakuumkomponente erstellt wird, und wobei in Schritt d) beim Ermitteln der Information ein Ergebnis der Bestimmung des erwarteten Verlaufs des Betriebs berücksichtigt wird. Mit anderen Worten, basierend auf den vorhandenen Daten, also zumindest dem aus dem Abbild bestimmten Bautyp der ermittelten Vakuumkomponente, kann ein sogenannter "digitaler Zwilling" der Vakuumkomponente erstellt werden, mit dem ein Betrieb der Vakuumkomponente simuliert werden kann. Je mehr Daten vorhanden sind, beispielsweise Daten über die Umgebung und/oder von weiteren Sensoren und/oder Datenquellen, desto genauer kann dieses digitale Modell den tatsächlichen Verlauf des zu erwartenden Betriebs der Vakuumkomponente beschreiben. Durch eine Berücksichtigung dieser Vorhersage in Schritt d) können beim Ermitteln der Information beispielsweise noch genauere und noch besser situationsangepasste Wartungsempfehlungen ermittelt werden. Ferner können auch weitergehende Informationen, wie zum Beispiel eine voraussichtliche Lebensdauer der Vakuumkomponente, ein Verbrauch von Betriebs- und Hilfsstoffen wie Strom, Hilfsgase, Kühlwasser, Schmiermittel oder ähnliches mit Hilfe des erstellten digitalen Modells noch genauer abgeschätzt werden.

Weiter kann das erfindungsgemäße Verfahren auch dadurch gekennzeichnet sein, dass das Unterstützungssystem eine Speichereinheit aufweist, und wobei ein Datensatz umfassend
- das in Schritt a) aufgenommene Abbild, und/oder
- die in Schritt b) erkannte Vakuumkomponente, und/oder
- den in Schritt c) bestimmte Bautyp, und/oder
- die in Schritt d) ermittelten Informationen

in der Speichereinheit abgespeichert wird,
wobei der Datensatz bevorzugt ferner

- die in Schritt a) erfasste Umgebung, und/oder
- die in Schritt b) erstellte Analyse der Umgebung, und/oder
- die durch die in Schritt a) angesteuerten und ausgelesenen weiteren Sensoren und/oder Datenquellen bereitgestellten Daten umfasst.

Diese Liste ist nicht abgeschlossen, es können auch weitere geeignete Merkmale im Datensatz enthalten sein und mit abgespeichert werden.

Ein derartiger abgespeicherter Datensatz, insbesondere wenn er zusätzlich noch einen Zeitstempel mit einem Datum und/oder einer Uhrzeit des Speicherzeitpunkts enthält, ermöglicht insbesondere eine Dokumentation der Ausführung des erfindungsgemäßen Verfahrens. Bevorzugt kann auf diese Weise auch im Nachhinein festgestellt werden, welche Informationen in Schritt e) ausgegeben wurden, und basierend auf welcher Grundlage diese Informationen in Schritt d) ermittelt wurden. Dadurch kann insbesondere eine Fehlersuche vereinfacht werden, wenn die Vakuumkomponente im weiteren Betrieb eine Fehlfunktion aufweisen sollte.

Darüber hinaus kann bei dem erfindungsgemäßen Verfahren vorgesehen sein, dass der Datensatz ferner einen Zeitstempel umfasst, und wobei beim Ermitteln der Information in Schritt d) ein Ergebnis eines Vergleichs von zumindest einem Datensatz und dessen Zeitstempel mit aktuellen Werten berücksichtigt wird. Mit anderen Worten, es wird ein zeitlicher Verlauf des Betriebs der Vakuumkomponente dokumentiert, und ferner dieser zeitliche Verlauf, insbesondere zumindest ein in der Vergangenheit gespeicherter Datenpunkt dieses Verlaufs, wird bei der Ermittlung der aktuell relevanten Informationen in Schritt d) berücksichtigt. Auf diese Weise kann eine noch bessere Anpassung der in Schritt e) angezeigten Informationen an den tatsächlichen Betrieb der Vakuumkomponente erfolgen, da nicht nur die zum aktuellen Zeitpunkt vorherrschenden Parameter, sondern auch bereits früher relevante Parameter berücksichtigt werden können. So können beispielsweise in der Vergangenheit aufgetretene Störungen, die durch die aktuell ermittelten Daten nicht mehr angezeigt werden, dennoch bei der Ermittlung der Information in Schritt d) berücksichtigt werden.

Bei einer weiteren Ausgestaltungsform des erfindungsgemäßen Verfahrens kann ferner vorgesehen sein, dass in Schritt d) als Informationen einstellbare Betriebsparameter der Vakuumkomponente ermittelt werden, und wobei in Schritt e) die Bereitstellung der ermittelten Informationen ein Einstellen der in Schritt d) ermittelten Betriebsparameter der Vakuumkomponente durch die Ausgabeeinheit umfasst, wobei bevorzugt vor dem Einstellen der ermittelten Betriebsparameter durch die Auswerteeinheit eine Benutzerfreigabe angefordert wird. Einstellbare Betriebsparameter sind veränderliche und insbesondere aktiv einstellbare Parameter, die den Betrieb der Vakuumkomponente beeinflussen. Derartige Betriebsparameter können beispielsweise bei einer Vakuumpumpe als Vakuumkomponente Werte oder einen Wertebereich für eine Drehzahl der Pumpmechanik darstellen. Auch andere Eigenschaften von Vakuumkomponente, wie zum Beispiel eine durch eine interne Kühlung der Vakuumkomponente einzustellende Temperatur der Vakuumkomponente oder auch ein durch die Vakuumkomponente einzustellender und/oder zu überwachender Druckbereich, können einstellbare Betriebsparameter im Sinne der Erfindung darstellen. Eine Ermittlung derartiger einstellbarer Betriebsparameter als den Betrieb der Vakuumkomponente betreffenden Informationen in Schritt d) des erfindungsgemäßen Verfahrens ermöglicht somit insbesondere, diese Betriebsparameter angepasst an die erkannte Vakuumkomponente und bevorzugt deren ermittelte Aufstellsituation und/oder erkannte Einsatzart beziehungsweise Einsatzzweck bereitzustellen.

Im erfindungsgemäßen Verfahren werden auch diese in Schritt d) ermittelten Betriebsparameter in Schritt e) des erfindungsgemäßen Verfahrens als Informationen bereitgestellt. Dies erfolgt in dieser Ausgestaltung des erfindungsgemäßen Verfahrens insbesondere durch eine entsprechende Einstellung der Betriebsparameter direkt an der Vakuumkomponente durch die Ausgabeeinheit selbst. Bevorzugt kann hierbei vorgesehen sein, dass die Ausgabeeinheit eine Schnittstelle aufweist, über die eine datenkommunizierende Verbindung mit der Vakuumkomponente hergestellt werden kann. Die datenkommunizierende Verbindung kann zum Beispiel kabelgebunden über ein Kabel erfolgen, wenn zum Beispiel die Ausgabeeinheit und die Vakuumkomponente entsprechende Steckerverbindungen für das verwendete Kabel aufweisen. Alternativ oder zusätzlich kann auch eine drahtlose datenkommunizierende Verbindung aufgebaut werden, beispielsweise über WLAN, Bluetooth oder Infrarot, wobei in diesem Fall die Vakuumkomponente und die Ausgabeeinheit die entsprechenden Sende- und Empfangskomponenten aufweisen. Insgesamt kann auf diese Weise eine direkte und insbesondere besonders schnelle Reaktion auf erkannte einzustellende Betriebsparameter, insbesondere auf Änderungen von Betriebsparametern, durch das Einstellen der ermittelten Betriebsparameter durch die Ausgabeeinheit selbst ermöglicht werden. Der Betrieb der Vakuumkomponente kann dadurch insgesamt sicherer gestaltet werden.

Weiter kann in dieser Ausgestaltungsform des erfindungsgemäßen Verfahrens auch vorgesehen sein, dass vor dem voranstehend beschriebenen direkten Einstellen der ermittelten Betriebsparameter durch die Ausgabeeinheit an der Vakuumkomponente noch eine Benutzerfreigabe angefordert wird. Mit anderen Worten, das Einstellen der Betriebsparameter durch die Ausgabeeinheit wird nur dann durchgeführt, wenn ein Benutzer, der insbesondere zumeist die Durchführung des erfindungsgemäßen Verfahrens ausgelöst hat, diesem Einstellen der Betriebsparameter zugestimmt hat. Auf diese Weise kann vermieden werden, dass Betriebsparameter ohne ein Wissen des Benutzers eingestellt und/oder geändert werden.

Gemäß einem zweiten Aspekt der Erfindung wird die Aufgabe gelöst durch ein Unterstützungssystem zum Unterstützen eines Betriebs einer Vakuumkomponente, das Unterstützungssystem zumindest aufweisend einen Bildsensor, eine Auswerteeinheit sowie eine Ausgabeeinheit. Das Unterstützungssystem gemäß dem zweiten Aspekt der Erfindung ist dadurch gekennzeichnet, dass die Auswerteeinheit zum Ausführen des Verfahrens gemäß dem ersten Aspekt der Erfindung ausgebildet ist.

Das Unterstützungssystem gemäß dem zweiten Aspekt der Erfindung weist sämtliche Elemente und Komponenten auf, die für eine Ausführung des Verfahrens gemäß dem ersten Aspekt der Erfindung notwendig sind. Sämtliche Vorteile und Merkmale, die voranstehend mit Bezug auf ein Verfahren gemäß dem ersten Aspekt der Erfindung beschrieben worden sind, können somit auch durch ein Unterstützungssystem gemäß dem zweiten Aspekt der Erfindung bereitgestellt werden.

Weiter kann das erfindungsgemäße Unterstützungssystem dahingehend ausgebildet sein, dass das Unterstützungssystem ein Gehäuse aufweist, wobei der Bildsensor, die Auswerteeinheit und die Ausgabeeinheit gemeinsam im Gehäuse angeordnet sind. Auf diese Weise kann das Unterstützungssystem, zumindest die wesentlichen Komponenten davon, an einem einzigen Ort bereitgestellt werden, wodurch insbesondere eine unabhängige und autonome Durchführung des erfindungsgemäßen Verfahrens ermöglicht werden kann. Bevorzugt ist das Gehäuse derart dimensioniert, dass das Unterstützungssystem für einen Benutzer tragbar ist. Insbesondere kann beispielsweise das Unterstützungssystem als ein Smartphone ausgebildet oder von einem Smartphone gebildet sein, wobei das Verfahren in einem Speicher des Smartphones als ein entsprechendes Computerprogrammprodukt ausführbar hinterlegt ist.

Alternativ kann bei dem erfindungsgemäßen Unterstützungssystem auch vorgesehen sein, dass die Auswerteeinheit durch eine räumlich vom Bildsensor und der Ausgabeeinheit getrennte Rechnereinheit gebildet ist. Durch das Vorhandensein zumindest des Bildsensors und der Ausgabeeinheit vor Ort kann sichergestellt werden, dass das Abbild der Vakuumkomponente aufgenommen und dem Benutzer die ermittelte Information ausgegeben werden kann. Ermöglicht durch drahtlose Datenkommunikation kann die Rechnereinheit mit der Auswerteeinheit an einem beliebigen Ort aufgebaut sein. Dieser Ort kann beispielsweise auch ein Rechenzentrum eines Herstellers der Vakuumkomponente sein, wodurch beispielsweise eine Fernanalyse und/oder -diagnose der Vakuumkomponente vorgenommen werden kann.

Weiter kann das erfindungsgemäße Unterstützungssystem dadurch gekennzeichnet sein, dass die Ausgabeeinheit eine Schnittstelle zum Übertragen von Daten, insbesondere von Betriebsparametern, an die Vakuumkomponente aufweist. Auf diese Weise kann insbesondere eine datenkommunizierende Verbindung zwischen der Vakuumkomponente und dem erfindungsgemäßen Unterstützungssystem aufgebaut werden. Für eine kabelgebundene datenkommunizierende Verbindung kann zum Beispiel kann die Schnittstelle der Ausgabeeinheit entsprechende Steckerverbindungen für das verwendete Kabel aufweisen. Alternativ oder zusätzlich kann auch eine drahtlose datenkommunizierende Verbindung aufgebaut werden, beispielsweise über WLAN, Bluetooth oder Infrarot, wobei in diesem Fall die Ausgabeeinheit beziehungsweise deren Schnittstelle die entsprechenden Sende-und Empfangskomponenten aufweisen. Die Schnittstelle der Ausgabeeinheit kann insbesondere auch zum Unterstützen beziehungsweise Herstellen mehrerer, insbesondere verschiedener, Verbindungsarten ausgebildet sein. Eine besonders große Flexibilität hinsichtlich der Vakuumkomponenten, zu denen eine entsprechende datenkommunizierende Verbindung aufgebaut werden kann, kann dadurch ermöglicht werden. Lediglich beispielhaft wird hier eine Schnittstelle einer Ausgabeeinheit mit USB-Buchse und zusätzlich Bluetooth-Sende/Empfangskomponenten angeführt. Insgesamt kann auf diese Weise eine direkte datengestützte Kommunikation zwischen dem Unterstützungssystem und der Vakuumkomponente ermöglicht werden, wodurch das Einstellen zum Beispiel von ermittelten Betriebsparametern durch die Ausgabeeinheit selbst und damit eine direkte und insbesondere besonders schnelle Reaktion auf erkannte einzustellende Betriebsparameter, insbesondere auf Änderungen von Betriebsparametern, ermöglicht werden kann. Der Betrieb der Vakuumkomponente kann dadurch sicherer gestaltet werden.

Gemäß einem dritten Aspekt der Erfindung wird die Aufgabe gelöst durch ein Computerprogrammprodukt zum Unterstützen eines Betriebs einer Vakuumkomponente, wobei das Computerprogrammprodukt computerlesbare Codemittel umfasst, die, wenn sie von einem oder mehreren Prozessoren einer Auswerteeinheit des Unterstützungssystems gemäß dem zweiten Aspekt der Erfindung ausgeführt werden, bewirken, dass das Unterstützungssystem das Verfahren gemäß dem ersten Aspekt der Erfindung ausführt. Das Computerprogrammprodukt gemäß dem dritten Aspekt der Erfindung ist für eine Ausführung durch das Unterstützungssystem gemäß dem zweiten Aspekt der Erfindung vorgesehen, wobei hierbei eine Ausführung des Verfahrens gemäß dem ersten Aspekt der Erfindung erfolgt. Sämtliche Vorteile und Merkmale, die voranstehend mit Bezug auf ein Verfahren gemäß dem ersten Aspekt der Erfindung beziehungsweise mit Bezug auf ein Unterstützungssystem gemäß dem zweiten Aspekt der Erfindung beschrieben worden sind, können somit auch durch ein Computerprogrammprodukt gemäß dem dritten Aspekt der Erfindung bereitgestellt werden.

Gemäß einem vierten Aspekt der Erfindung wird die Aufgabe gelöst durch ein nicht-übertragbares computerlesbares Medium, in dem das Computerprogrammprodukt gemäß einem dritten Aspekt der Erfindung gespeichert ist. Sämtliche Vorteile, die voranstehend mit Bezug auf das Computerprogrammprodukt gemäß dem dritten Aspekt der Erfindung, und damit auch mit Bezug auf ein Verfahren gemäß dem ersten Aspekt der Erfindung beziehungsweise mit Bezug auf ein Unterstützungssystem gemäß dem zweiten Aspekt der Erfindung, beschrieben worden sind, können somit auch durch ein computerlesbares Medium gemäß dem vierten Aspekt der Erfindung bereitgestellt werden

Die Erfindung wird im Folgenden beispielhaft unter Bezugnahme auf die Zeichnungen beschrieben. Es zeigen jeweils schematisch:
- Fig. 1: ein Abbild einer Umgebung mit Vakuumkomponenten,
- Fig. 2: ein erfindungsgemäßes Verfahren, und
- Fig. 3: ein erfindungsgemäßes Unterstützungssystem.

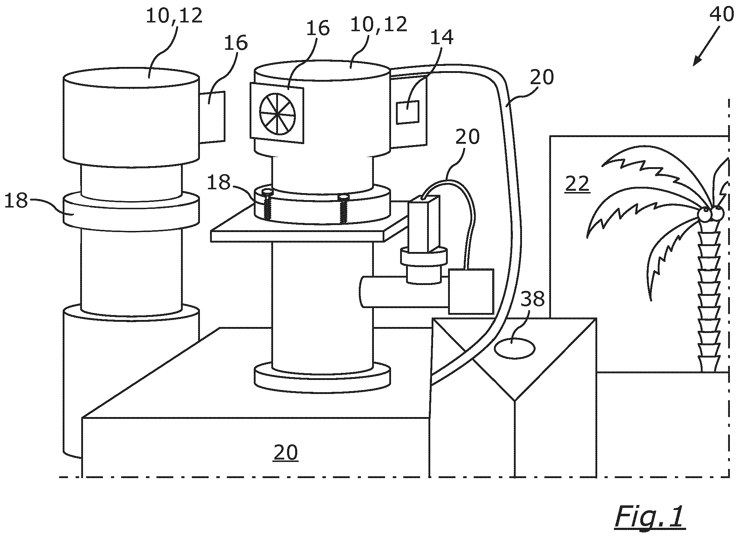

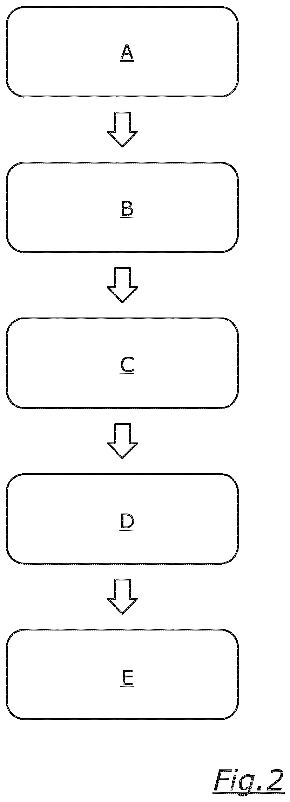

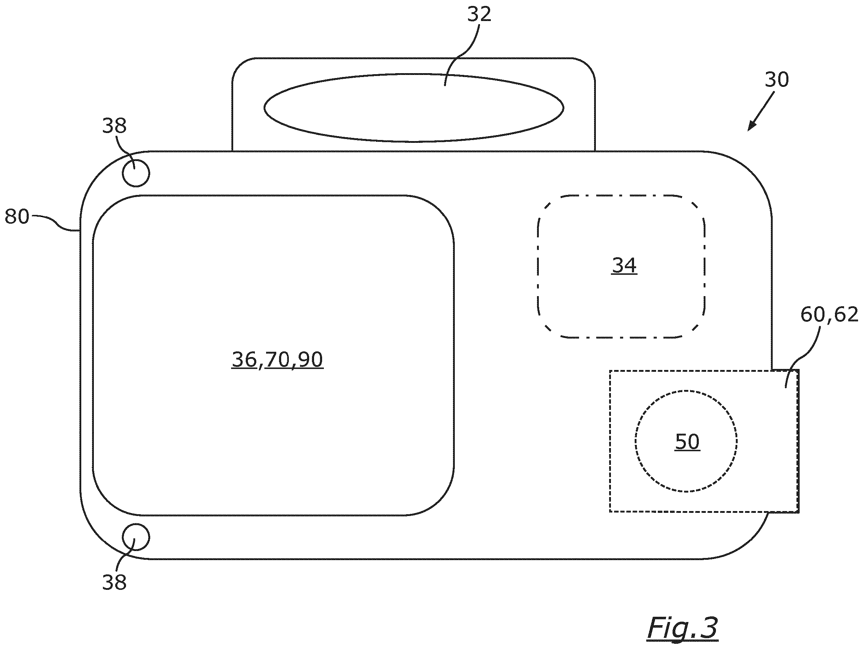

Fig. 1 zeigt ein Abbild 40 einer Vakuumkomponente 10 in einer Umgebung 22, wie es im Zuge der Ausführung des in Fig. 2 gezeigten erfindungsgemäßen Verfahrens durch ein Unterstützungssystem 30, das es beispielhaft in Fig. 3 abgebildet ist. aufgenommen wird. Im Folgenden werden daher die Fig. 1, 2, und 3 gemeinsam beschrieben, wobei auf die einzelnen Abbildungen gegebenenfalls spezifisch eingegangen wird.

Durch ein erfindungsgemäßes Verfahren (vgl. Fig. 2) kann ein Betrieb einer Vakuumkomponente 10 unterstützt werden. Insbesondere kann durch ein erfindungsgemäßes Verfahren auch einem Benutzer ohne spezielle Ausbildung bezüglich der Vakuumkomponente 10, der also eben kein Servicetechniker oder ähnliches ist, den Betrieb der Vakuumkomponente 10 betreffende Informationen 70 angezeigt werden (vgl. Fig. 3). Dadurch ist es auch diesem ermöglicht, Maßnahmen für einen sicheren Betrieb der Vakuumkomponente 10 durchzuführen.

Das erfindungsgemäße Verfahren wird durch beziehungsweise ein Unterstützungssystem 30 durchgeführt, das bevorzugt ein wie in Fig. 3 dargestelltes erfindungsgemäßes Unterstützungssystem 30 sein kann. Das Unterstützungssystem 30 weist zumindest einen Bildsensor 32 zum Aufnehmen eines Abbilds 40 der Vakuumkomponente 10, eine Ausgabeeinheit 36 zum Ausgeben der Information 70, sowie Auswerteeinheit 34 auf. Die Auswerteeinheit 34 ist mit dem Bildsensor 32 und der Ausgabeeinheit 36 datenkommunizierend verbunden. Ihre Funktion im Rahmen des erfindungsgemäßen Verfahrens wird nachfolgend beschrieben.

Die Anweisungen des erfindungsgemäßen Verfahrens können computerlesbar als erfindungsgemäßes Computerprogrammprodukt 50 vorliegen. Bevorzugt ist das Computerprogrammprodukt auf einem erfindungsgemäßen computerlesbaren Medium 60 abgespeichert. Das computerlesbare Medium 60 kann auch Teil einer Speichereinheit 62 des Unterstützungssystems 30 sein.

Wie in Fig. 3 dargestellt können die oben aufgeführten Elemente des Unterstützungssystems 30 in einem gemeinsamen Gehäuse 80 angeordnet sein. Eine mögliche Ausgestaltung des Unterstützungssystems 30 ist zum Beispiel ein Smartphone mit einer Kamera als Bildsensor 32, auf der das erfindungsgemäße Computerprogrammprodukt 50 mit den Anweisungen des erfindungsgemäßen Verfahrens abgespeichert ist und ausgeführt werden kann.

Alternativ, jedoch nicht explizit dargestellt, kann in einem erfindungsgemäßen Unterstützungssystem 30 die Auswerteeinheit 34 auch räumlich getrennt vom Bildsensor 32 und der Ausgabeeinheit 36 angeordnet sein. Auch in diesem Fall besteht dennoch eine datenkommunizierende Verbindung zwischen der Auswerteeinheit 34 auf der einen und dem Bildsensor 32 und der Ausgabeeinheit 36 auf der anderen Seite, zum Beispiel über eine drahtlose Datenverbindung. Der Benutzer des Unterstützungssystem 30 hat am Aufstellort der Vakuumkomponente 10 dann nur den Bildsensor 32 und die Ausgabeeinheit 36 vorliegen, die Auswerteeinheit 34 hingegen kann beispielsweise in einem Rechenzentrum des Herstellers der Vakuumkomponente 10 aufgestellt sein.

Im Folgenden wird eine mögliche Ausführung des erfindungsgemäßen Verfahrens (vgl. Fig. 2) bezüglich der in Fig. 1 gezeigten Vakuumkomponenten 10 beschrieben. Das erfindungsgemäße Verfahren wird beispielhaft unter Verwendung des in Fig. 3 gezeigten Unterstützungssystem 30 ausgeführt.

In einem ersten Schritt a) A des erfindungsgemäßen Verfahrens wird durch den Bildsensor 32 ein Abbild 40 aufgenommen. Das Abbild 40 kann ein einfaches Standbild sein. Darüber hinaus sind auch mehrere Standbilder, bevorzugt aus unterschiedlichen Blickwinkeln beziehungsweise Perspektiven, oder ein Video als Abbild 40 denkbar. In diesem Abbild 40 ist zumindest die Vakuumkomponente 10, im dargestellten Beispiel zwei Turbopumpen, enthalten. Bevorzugt ist zusätzlich auch eine Umgebung 22 mit im Abbild 40 enthalten, das, wie durch den angedeuteten Blick durch eine Fensteröffnung dargestellt, nicht nur auf das direkte Umfeld der Vakuumkomponenten begrenzt ist.

Weiter können in diesem ersten Schritt a) A zusätzliche Sensoren 38 ausgelesen werden, die ergänzende Informationen über das Umfeld und die Rahmenbedingungen liefern, in denen die Vakuumkomponenten 10 betrieben werden. In Fig. 1 ist beispielhaft ein Sensor 38 im Abbild 40 erkennbar, der eine Temperatur und eine Feuchtigkeit in der Umgebung der Vakuumkomponenten 10 ermittelt. Weiter kann auch das Unterstützungssystem 30 selbst neben dem Bildsensor 32 weitere Sensoren 38 aufweisen, beispielsweise Schallsensoren wie Mikrophone oder Temperatursensoren. Alternativ oder zusätzlich können in Schritt a) A auch externe Datenquellen abgerufen werden, um ebenfalls zusätzliche ergänzende Informationen zu erhalten. Beispielhaft zu nennen sind hier Datum, Uhrzeit, Wetterdaten, Ortungsdienste, Erdbebenwarnungen oder Angaben über eine Sonnenaktivität.

Im folgenden Schritt b) B des erfindungsgemäßen Verfahrens wird durch die Auswerteeinheit 34 das Abbild 40 ausgewertet um die Vakuumkomponente 10 zu erkennen. Im dargestellten Abbild 40 (vgl. Fig. 1) sind, wie bereits dargelegt, zwei derartige Vakuumkomponenten 10 vorhanden. Jede einzelne dieser Vakuumkomponenten 10 wird in der Auswertung des Abbilds 40 durch die Auswerteeinheit 34 erkannt. Im vorliegenden Beispiel handelt es sich bei beiden Vakuumkomponenten 10 um Turbopumpen.

Allein das Erkennen der Vakuumkomponenten 10 reicht jedoch nicht aus, um zielgerichtet passende Informationen 70 für die jeweilige Vakuumkomponente 10 zu ermitteln. Daher wird in einem weiteren Schritt c) C ein Bautyp 12 der jeweiligen Vakuumkomponente 10 bestimmt. Im vorliegenden Beispiel somit, um welche Turbopumpen es sich genau bei den beiden in Schritt b) B erkannten Vakuumkomponenten 10 handelt.

Sowohl für das Erkennen der Vakuumkomponenten 10 in Schritt b) B als auch für das Bestimmen des jeweiligen Bautyps 12 in Schritt c) C kann das Abbild 40 durch die Auswerteeinheit 30 bezüglich einem Vorhandensein von Identifizierungskennzeichen 14 ausgewertet werden. Derartige Identifizierungskennzeichen 14 können, wie explizit in Fig. 1 gekennzeichnet, beispielsweise ein Typenschild, eine Beschriftung oder ein QR-Code sein. Jedoch stellen im Sinne der Erfindung auch ein Umriss oder eine dreidimensionale Form der jeweiligen Vakuumkomponente 10 ein Identifizierungskennzeichen 14 dar. Weiter können auch Subkomponenten 16 der Vakuumkomponente 10 oder weitere, mit der Vakuumkomponente 10 verbundene Elemente 20 als Identifizierungskennzeichen 14 herangezogen werden, da ein Vorhandensein oder Fehlen beziehungsweise eine Art ihrer Anordnung Rückschlüsse auf die jeweilige Vakuumkomponente 10 oder deren Bautyp 12 ermöglichen.

Basierend auf diesen Vorbereitungen wird im folgenden Schritt d) D eine oder mehrere Informationen 70 ermittelt, die den Betrieb der jeweils erkannten Vakuumkomponente 10 und deren bestimmten Bautyp 12 betrifft. Dies können beispielsweise die Betriebsanleitung sein, aber auch weitergehende Informationen 70 wie zum Beispiel Wartungshinweise oder Pflegeanforderungen.

Ein Vorteil des vorliegenden Verfahrens liegt insbesondere darin, dass die ermittelten Informationen 70 bevorzugt jedoch nicht nur auf dem Erkennen der Vakuumkomponente 10 und Bestimmung deren Bautyps 12 beruht, sondern dass beim Ermitteln der Informationen auch weitere Entscheidungsgrundlagen mit einbezogen werden können.

So kann beispielsweise bereits eine im Abbild 40 mit aufgenommenen Umgebung 22 Rückschlüsse auf einen Aufstellort der Vakuumkomponente 10 ermöglichen. Im dargestellten Beispiel sind eine unverschlossene Gebäudeöffnung und ferner tropische Pflanzen in der Umgebung 22 erkennbar, woraus auf heiße und feuchte klimatische Bedingungen und ferner auf einen wahrscheinlich erhöhten Verschmutzungsgrad geschlossen werden kann. Dies kann zum Beispiel mit einer Verkürzung von empfohlenen Wartungsintervallen oder Empfehlungen für eine Verbesserte Kühlung in den ermittelten Informationen 70 berücksichtigt werden.

Auch kann dem Abbild 40 eine Aufbauorientierung der Vakuumkomponente 10 oder Abstände der Vakuumkomponente zu Gegenständen in der Umgebung 22, auch beispielsweise zu Wänden, entnommen werden. Die vorliegend dargestellte "Überkopf"-Montage ist für Turbopumpen zulässig. Abweichungen von vorgesehenen Aufbauorientierungen können durch entsprechende Inhalte der ermittelten Informationen 70 berücksichtigt werden. Sollten zu kleine Abstände erkannt werden, kann in den ermittelten Informationen 70 eine Änderung der Position der Vakuumkomponente 10 im Raum empfohlen werden.

Ferner können auch Befestigungen 18 und Subkomponenten 16 der Vakuumkomponenten, soweit im Abbild 40 sichtbar, überprüft werden. Im vorliegenden Beispiel scheinen bei der linken der beiden im Abbild 40 sichtbaren Vakuumkomponenten 10 einige Schrauben der vorgesehenen Befestigung 18 zu fehlen. Ferner ist ebenfalls bei der linken Vakuumkomponente der als Subkomponente 16 erkannte Bauplatz, in den bei der rechten Vakuumkomponente wie vorgesehen ein Lüfter als Subkomponente 16 eingebaut ist, unbelegt. Dies kann in der für die linke Vakuumkomponente 10 ermittelte Information 70 durch entsprechende Hinweise und Empfehlungen berücksichtigt werden.

Weiter ist auch eine Auswertung des Abbilds 40, insbesondere einer im Abbild 40 sichtbaren Umgebung 22, nach vorhandenen und mit der Vakuumkomponente 10 verbundenen Elementen 20 erfolgen. Beispielhaft sind bei der rechten Vakuumpumpe ein Drucksensor und Gaszuleitungen als weitere Elemente 20 gekennzeichnet. Eine Möglichkeit der Berücksichtigung dieser weiteren Elemente 20 in den ermittelten Informationen besteht zum Beispiel darin, eine Eignung der erkannten Elemente für die vorliegende Vakuumkomponente 10 beziehungsweise deren spezifischen Bautyp 12 zu überprüfen. Im vorliegenden Fall kann dies zum Beispiel durch einen Abgleich des Druckbereichs, für den der Drucksensor geeignet ist, mit demjenigen der Turbopumpe erfolgen, oder ob die Gaszuleitung hinsichtlich Durchmesser und Länge für die vorliegende Turbopumpe und deren Pumpleistung ausreichend dimensioniert ist.

Darüber hinaus können, wie eingangs bereits erwähnt, weitere Sensoren 38 angesteuert und deren Messdaten auch bei der Ermittlung der Informationen in Schritt d) D herangezogen werden. Dies gilt sowohl für Sensoren 38 in der Umgebung 22 der Vakuumkomponente 10 (vgl. Fig. 1), als auch für weitere Sensoren 38 des Unterstützungssystems 30. So kann ein Unterstützungssystem 30 mit Mikrophonen als weitere Sensoren 38 zum Beispiel ein Video mit Tonspur als Abbild 40 aufnehmen, und zusätzlich zur visuellen Information auch die akustischen Informationen des Videos im erfindungsgemäßen Verfahren verwendet werden, sowohl in den Schritten b) B zum Erkennen der Vakuumkomponente 10 beziehungsweise Schritt c) C zum Bestimmen des Bautyps 12, als auch insbesondere in Schritt d) D zum Ermitteln der den Betrieb der Vakuumkomponente 10 betreffenden Informationen 70. So können die akustischen Informationen Betriebsgeräusche der Vakuumkomponente 10 enthalten, die zum Beispiel ein Erkennen von Lagerschäden ermöglichen können.

Auch eine Berücksichtigung von externen Datenquellen ist möglich, wobei die dadurch zugänglichen Daten ebenfalls beim Ermitteln der Information 70 berücksichtigt werden können. Beispielhaft sind hier erneut Wetterdaten, Ortungsdienste, Erdbebenwarnungen oder Angaben über eine Sonnenaktivität zu nennen. Ist zum Beispiel bekannt, dass die Vakuumkomponente 10 in einem Erdbeben-gefährdeten Gebiet oder eine erhöhte Sonnenaktivität vorherrscht steht, können entsprechende Schutzmaßnahmen, wie z.B. das Vorsehen einer USV (unterbrechungsfreie Stromversorgung) vorteilhaft sein und daher in die ermittelten Informationen 70 aufgenommen werden.

Bei der Ermittlung der Informationen 70 in Schritt d) D kann auch eine Benutzeridentifikation, insbesondere auch inklusive einer Authentifizierung des jeweiligen Benutzers, durchgeführt und berücksichtigt werden. Durch die Benutzeridentifikation kann sichergestellt werden, dass die bereitgestellten Informationen 70 noch besser auf den jeweiligen Benutzer, beispielsweise seinen Wissenstand, abgestimmt ermittelt werden können. Durch eine Authentifizierung kann beispielsweise sichergestellt werden, dass eventuell sicherheitsrelevante Informationen 70 auch nur denjenigen Benutzern angezeigt wird, die eine entsprechende Sicherheitsfreigabe aufweisen.

Weiter ist auch denkbar, dass Datensätze betreffend die vorliegende Vakuumkomponente 10 und deren Betrieb beziehungsweise die im Zuge einer Durchführung des erfindungsgemäßen Verfahren aufgenommenen Daten und die entsprechend ermittelten Informationen 70 in einer Speichereinheit 62 abgespeichert werden. Dies kann insbesondere für eine spätere Dokumentation des Verfahrens herangezogen werden. Durch zusätzliches Abspeichern eines Zeitstempels kann insbesondere bei einer späteren erneuten Durchführung des Verfahrens auf den entsprechenden Datensatz in Schritt d) D beim Ermitteln der Informationen 70 zurückgegriffen werden und so ein zeitlicher Verlauf des Betriebs der Vakuumkomponente 10 nicht nur bereitgestellt, sondern insbesondere auch bei der Ermittlung der Informationen 70 berücksichtigt werden.

Im abschließenden Schritt e) E werden die in Schritt d) D ermittelten Informationen 70 durch die Ausgabeeinheit 36 bereitgestellt. In der Ausgestaltung des Unterstützungssystems 30 von Fig. 3 werden die Informationen 70 auf der als Bildschirm ausgebildeten Ausgabeeinheit 36 rein visuell angezeigt. Alternativ oder zusätzlich ist auch eine audio-visuelle Anzeige, beispielsweise einer als vertontes Video vorliegenden Information 70, oder eine physische Bereitstellung, beispielsweise durch einen Drucker, denkbar.

Wie in Fig. 3 dargestellt, kann die Ausgabeeinheit 36 auch mit einer Schnittstelle 90 ausgebildet sein, über die eine datenkommunizierende Verbindung zwischen dem Überwachungssystem 30 und der Vakuumkomponente 10 aufgebaut werden kann. Die datenkommunizierende Verbindung kann, je nach Ausgestaltung der Vakuumkomponente 10 und der Schnittstelle 90, kabelgebunden und/oder drahtlos sein. Insbesondere kann die Schnittstelle 90 der Ausgabeeinheit 36 auch mit mehreren verschiedenen Arten von datenkommunizierenden Verbindungen kompatibel sein.

Eine derartige Schnittstelle 90 kann insbesondere dann Verwendung finden, wenn im Schritt d) D als Informationen 70 einstellbare Betriebsparameter der Vakuumkomponente 10 ermittelt werden. Diese können dann über die durch die Schnittstelle 90 ermöglichte datenkommunizierende Verbindung direkt an die Vakuumkomponente 10 übertragen werden. Alternativ oder zusätzlich ist auch eine einfache Anzeige der Betriebsparameter auf einem Display der Ausgabeeinheit 36 möglich. Insbesondere kann auch vorgesehen sein, das Übertragen der Betriebsparameter über die Schnittstelle 90 an die Vakuumkomponente 10 erst nach Freigabe durch einen Benutzer vorzunehmen. Eine dafür erforderliche Anforderung der Benutzerfreigabe kann wiederum durch das Unterstützungssystem 30 erfolgen, insbesondere unter Anzeige der als Information 70 ermittelten Betriebsparameter.

Insgesamt können somit durch ein erfindungsgemäßes Verfahren ein Betrieb einer Vakuumkomponente 10 unterstützt werden. Insbesondere durch das Bereitstellen der den Betrieb der Vakuumkomponente 10 betreffenden Informationen 70 können auch Benutzer ohne spezielle Ausbildung bezüglich der Vakuumkomponente 10 Maßnahmen für einen sicheren Betrieb der Vakuumkomponente 10 angezeigt werden, um diese dann durchzuführen.

### Bezugszeichenliste

- 10: Vakuumkomponente
- 12: Bautyp
- 14: Identifizierungskennzeichen
- 16: Subkomponente
- 18: Befestigung
- 20: Verbundenes Element
- 22: Umgebung

- 30: Unterstützungssystem
- 32: Bildsensor
- 34: Auswerteeinheit
- 36: Ausgabeeinheit
- 38: Sensor

- 40: Abbild

- 50: Computerprogrammprodukt

- 60: Computerlesbares Medium
- 62: Speichereinheit

- 70: Information

- 80: Gehäuse

- 90: Schnittstelle

- A: Schritt a)
- B: Schritt b)
- C: Schritt c)
- D: Schritt d)
- E: Schritt e)

## Patentansprüche

1. Verfahren zum Unterstützen eines Betriebs einer Vakuumkomponente (10) durch ein Unterstützungssystem (30), das Unterstützungssystem (30) zumindest umfassend einen Bildsensor (32), eine Auswerteeinheit (34) sowie eine Ausgabeeinheit (36), aufweisend folgende von der Auswerteeinheit (34) durchgeführte Schritte:
a) Aufnehmen eines Abbilds (40) der Vakuumkomponente (10) durch den Bildsensor (32),
b) Auswerten des in Schritt a) (A) aufgenommenen Abbilds (40) durch die Auswerteeinheit (34) zum Erkennen der Vakuumkomponente (10) im Abbild (40),
c) Bestimmen eines Bautyps (12) der in Schritt b) (B) erkannten Vakuumkomponente (10) durch die Auswerteeinheit (34),
d) Ermitteln von den Betrieb des in Schritt c) (C) bestimmten Bautyps (12) der Vakuumkomponente (10) betreffenden Informationen (70) durch die Auswerteeinheit (34), und
e) Bereitstellung der in Schritt d) ermittelten Informationen (70) durch die Ausgabeeinheit (36).

2. Verfahren nach Anspruch 1,
wobei in Schritt a) (A) das Abbild (40) der Vakuumkomponente (10) als ein Standbild und/oder als mehrere Standbilder aus verschiedenen Perspektiven und/oder als ein Video der Vakuumkomponente (10) aufgenommen wird.

3. Verfahren nach Anspruch 1 oder 2,
wobei das Abbild (40) in Schritt b) (B) zum Erkennen der Vakuumkomponente (10) und/oder in Schritt c) (C) zum Bestimmen des Bautyps (12) der Vakuumkomponente (10) durch die Auswerteeinheit (34) bezüglich eines Identifizierungskennzeichens (14) ausgewertet wird, wobei als Identifizierungskennzeichen (14) bevorzugt wenigstens eines der folgenden Merkmale verwendet wird:
- Typenschild,
- Beschriftung,
- QR-Code,
- Umriss,
- dreidimensionale Form,
- Vorhandensein und/oder Anordnung von Subkomponenten (16) der Vakuumkomponente (10),
- Vorhandensein und/oder Anordnung von weiteren, mit der Vakuumkomponente (10) verbundenen Elementen (20).

4. Verfahren nach einem der vorstehenden Ansprüche,
wobei in Schritt a) (A) zusätzlich eine Umgebung (22) der Vakuumkomponente (10) im Abbild (40) aufgenommen wird, wobei, insbesondere in Schritt b) (B) und/oder in Schritt c) (C), die in Schritt a) (A) aufgenommene Umgebung (22) analysiert wird, und wobei in Schritt d) (D) die Informationen (70) zusätzlich basierend auf Ergebnissen der durchgeführten Analyse der Umgebung (22) ermittelt werden, wobei bevorzugt die in Schritt a) (A) aufgenommene Umgebung (22) nach zumindest einem der folgenden Kriterien analysiert wird:
- Aufstellort,
- Verschmutzungsgrad der Umgebung (22),
- Aufbauorientierung,
- Befestigung (18) der Vakuumkomponente (10),
- Abstände der Vakuumkomponente (10) zu Gegenständen in der Umgebung (22),
- Subkomponenten (16) der Vakuumkomponente (10) und deren Eigenschaften,
- mit der Vakuumkomponente (10) verbundene weitere Elemente (20) und deren Eigenschaften, insbesondere Energieversorgung und/oder Gaszuführung und/oder Gasableitung.

5. Verfahren nach einem der vorstehenden Ansprüche,
wobei in Schritt a) (A) weitere Sensoren (38) und/oder Datenquellen zum Bereitstellen von Daten angesteuert und deren Daten ausgelesen werden, und wobei in Schritt d) (D) die Informationen (70) zusätzlich basierend auf den in Schritt a) (A) ausgelesenen Daten der weiteren Sensoren (38) und/oder Datenquellen ermittelt werden, wobei bevorzugt zumindest einer der weitere Sensoren (38) und/oder Datenquellen eingesetzt wird:
- Schallsensor,
- Wärmesensor, insbesondere Wärmebildkamera,
- Feuchtigkeitssensor,
- Temperatursensor,
- Höhenmessung,
- Datum,
- Uhrzeit,
- Wetterdaten,
- Ortungsdienste,
- Erdbebenwarnung,
- Sonnenaktivität.

6. Verfahren nach einem der vorstehenden Ansprüche,
wobei vor Schritt d) (D) durch die Auswerteeinheit (34) eine Benutzeridentifikation durchgeführt wird, und wobei in Schritt d) (D) bei der Ermittlung der Informationen (70) ein Ergebnis der Benutzeridentifikation berücksichtigt wird, wobei bevorzugt die Benutzeridentifikation eine Authentifizierung des Benutzers umfasst.

7. Verfahren nach einem der vorstehenden Ansprüche,
wobei ein digitales Modell der Vakuumkomponente (10) für eine Bestimmung eines erwarteten Verlaufs des Betriebs der Vakuumkomponente (10) erstellt wird, und wobei in Schritt d) (D) beim Ermitteln der Information (70) ein Ergebnis der Bestimmung des erwarteten Verlaufs des Betriebs berücksichtigt wird.

8. Verfahren nach einem der vorstehenden Ansprüche,
wobei das Unterstützungssystem (30) eine Speichereinheit (62) aufweist, und wobei ein Datensatz umfassend
- das in Schritt a) (A) aufgenommene Abbild (40), und/oder
- die in Schritt b) (B) erkannte Vakuumkomponente (10), und/oder
- den in Schritt c) (C) bestimmte Bautyp (12), und/oder
- die in Schritt d) (D) ermittelten Informationen (70) in der Speichereinheit (62) abgespeichert wird,
wobei der Datensatz bevorzugt ferner
- die in Schritt a) (A) erfasste Umgebung (22), und/oder
- die in Schritt b) (B) erstellte Analyse der Umgebung (22), und/oder
- die durch die in Schritt a) (A) angesteuerten und ausgelesenen weiteren Sensoren (38) und/oder Datenquellen bereitgestellten Daten umfasst.

9. Verfahren nach Anspruch 8,
wobei der Datensatz ferner einen Zeitstempel umfasst, und wobei beim Ermitteln der Information (70) in Schritt d) (D) ein Ergebnis eines Vergleichs von zumindest einem Datensatz und dessen Zeitstempel mit aktuellen Werten berücksichtigt wird.

10. Verfahren nach einem der vorstehenden Ansprüche,
wobei in Schritt d) (D) als Informationen (70) einstellbare Betriebsparameter der Vakuumkomponente (10) ermittelt werden, und
wobei in Schritt e) (E) die Bereitstellung der ermittelten Informationen (70) ein Einstellen der in Schritt d) (D) ermittelten Betriebsparameter der Vakuumkomponente (10) durch die Ausgabeeinheit (36) umfasst, wobei bevorzugt vor dem Einstellen der ermittelten Betriebsparameter durch die Auswerteeinheit (34) eine Benutzerfreigabe angefordert wird.

11. Unterstützungssystem (30) zum Unterstützen eines Betriebs einer Vakuumkomponente (10), das Unterstützungssystem (30) zumindest aufweisend einen Bildsensor (32), eine Auswerteeinheit (34) sowie eine Ausgabeeinheit (36),
wobei die Auswerteeinheit (34) zum Ausführen des Verfahrens gemäß einem der vorstehenden Ansprüche ausgebildet ist.

12. Unterstützungssystem (30) nach Anspruch 11,
wobei das Unterstützungssystem (30) ein Gehäuse aufweist, wobei der Bildsensor (32), die Auswerteeinheit (34) und die Ausgabeeinheit (36) gemeinsam im Gehäuse angeordnet sind,
oder
wobei die Auswerteeinheit (34) durch eine räumlich vom Bildsensor (32) und der Ausgabeeinheit (36) getrennte Rechnereinheit gebildet ist.

13. Unterstützungssystem (30) nach Anspruch 11 oder 12,
wobei die Ausgabeeinheit (36) eine Schnittstelle (90) zum Übertragen von Daten, insbesondere von Betriebsparametern, an die Vakuumkomponente (10) aufweist.

14. Computerprogrammprodukt (50) zum Unterstützen eines Betriebs einer Vakuumkomponente (10), wobei das Computerprogrammprodukt (50) computerlesbare Codemittel umfasst, die, wenn sie von einem oder mehreren Prozessoren einer Auswerteeinheit (34) des Unterstützungssystems (30) nach einem der Ansprüche 11 bis 13 ausgeführt werden, bewirken, dass das Unterstützungssystem (30) das Verfahren nach einem der Ansprüche 1 bis 10 ausführt.

15. Nicht-übertragbares computerlesbares Medium (60), in dem das Computerprogrammprodukt (50) nach Anspruch 14 gespeichert ist.
